# EUROPEAN PATENT SPECIFICATION

(11) **EP 1 719 326 B1**
(45) Date of publication and mention of the grant of the patent: **30.05.2018**
(21) Application number: 05705874.5
(22) Date of filing: 21.01.2005
(51) Int. Cl.: H04L 29/08

(54) **METHOD FOR IMPROVING PEER TO PEER NETWORK COMMUNICATION**
VERFAHREN ZUR VERBESSERUNG DER PEER-TO-PEER-NETZWERKKOMMUNIKATION
PROCÉDÉ PERMETTANT D'AMÉLIORER LA COMMUNICATION DANS UN RÉSEAU POSTE A POSTE

(30) Priority: 23.01.2004 US 764111; 21.01.2005 US 40364
(43) Date of publication of application: 08.11.2006
(73) Proprietor: Kroll Information Assurance, LLC, New York, New York 10016 (US)
(72) Inventor: HOPKINS, Samuel, P., Freedom, PA 15042 (US)
(74) Representative: Röthinger, Rainer
(86) International application number: PCT/US2005/001623
(87) International publication number: WO 2005/074230

(56) References cited:
- US-A1- 2002 184 310
- US-A1- 2003 208 621
- US-A1- 2004 148 434
- SIU MAN LUI & SAI HO KWOK: "Interoperability of peer-to-peer file sharing protocols" ACM SIGECOM EXCHANGES, vol. 3, August 2002 (2002-08), pages 25-33, XP002322245 Retrieved from the Internet: URL:http://portal.acm.org/citation.cfm?id= 844339.844350>
- ANDY ORAM: ""PEER-TO-PEER; Harnessing the Power of Disruptive technologies" March 2001 (2001-03), O REILLY , USA , XP002322246 ISBN: 0-596-00110 page 381 - page 392
- ZHENYUN ZHUANG ET AL: "Hybrid periodical flooding in unstructured peer-to-peer networks" PARALLEL PROCESSING, 2003. PROCEEDINGS. 2003 INTERNATIONAL CONFERENCE ON 6-9 OCT. 2003, PISCATAWAY, NJ, USA,IEEE, 6 October 2003 (2003-10-06), pages 171-178, XP010664166 ISBN: 0-7695-2017-0
- STEVEN HESSING: "Peer to Peer Messaging Protocol (PPMP)" ON LINE, April 2002 (2002-04), pages 1-57, XP015001173
- LINDEMANN C ET AL: "A distributed search service for peer-to-peer file sharing in mobile applications" PEER-TO-PEER COMPUTING, 2002. (P2P 2002). PROCEEDINGS. SECOND INTERNATIONAL CONFERENCE ON SEPT. 5-7, 2002, PISCATAWAY, NJ, USA,IEEE, 5 September 2002 (2002-09-05), pages 73-80, XP010612188 ISBN: 0-7695-1810-9
- FINDELI M: "P2P (Peer-to-Peer Networking)" ON LINE, 1 July 2001 (2001-07-01), XP002241326
- SCARLATA V ET AL: "Responder anonymity and anonymous peer-to-peer file sharing" PROCEEDINGS OF THE INTERNATIONAL CONFERENCE ON NETWORK PROTOCOLS, 11 November 2001 (2001-11-11), pages 272-280, XP002222334
- LI XIAO ET AL: "Mutual anonymity protocols for hybrid peer-to-peer systems" PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003, INTERNATIONAL CONFERENCE ON DISTRIBUTED COMPUTING SYSTEMS, LOS ALAMITOS, CA : IEEE COMP. SOC, US, vol. CONF. 23, 19 May 2003 (2003-05-19), pages 68-75, XP010642274 ISBN: 0-7695-1920-2

## Description

### Field of the Invention

The present invention provides a method for improving peer to peer network communications, and, in particular, to connecting one or more peer to peer networks together and accepting communication messages from one and providing it to another and optionally changing communication message radius parameters to increase the communication message radius of travel on the network.

### Background of the Invention

As used herein, peer to peer networks which are the subject of the present invention comprise multiple nodes, each node typically consisting both of file server and client which can send and receive data or "Communication messages" to or from a node to which such is connected.

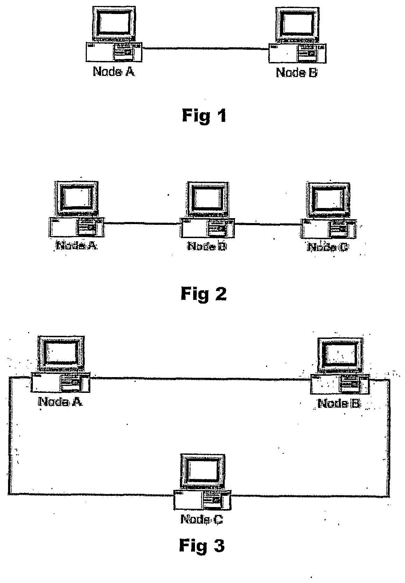

In a peer to peer network each node is connected to other nodes over a communication medium such as the internet either directly or through some type of proxy. For example, when a search request is issued such originating node sends a search request to all of the nodes to which it is connected, (see Figure 1) These nodes search their list of available files and if a match is found they send a response back with the location. However, a peer to peer proxy network typically consists of node A which is connected to a node B and node B is connected to a node C. (see Figure 2) Node A is not directly connected to node C such that if node A issues a search request it will be forwarded to node B and Node B will search its available files and if a match is found it will send a response back to node A. Node B will then forward node A's request to node C and Node C will search its available files and if a match is found it will send a response back to node B. Node B will then forward this response to node A. Figure 3 depicts a nonproxy loop network wherein each node is directly connected to another.

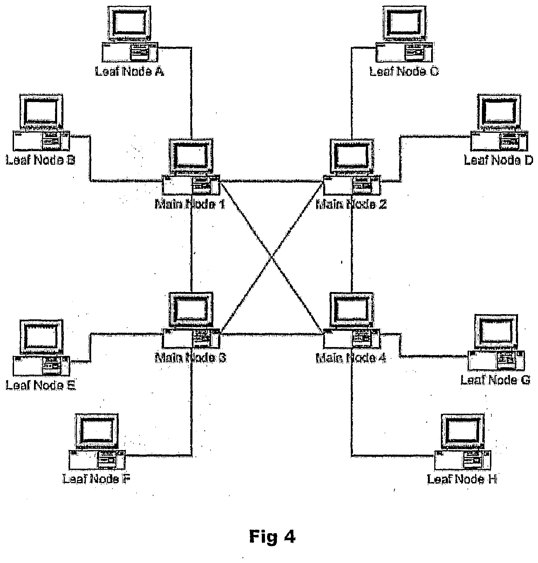

Some peer to peer networks utilize a leaf node/main node proxy topology (See Figure 4) where some nodes are classified as main nodes and the remaining nodes are classified as leaf nodes. Leaf nodes can only connect to main nodes. Only main nodes can connect to other main nodes. When a leaf node issues a search request it sends the request to the main node with which it is connected. The main node then forwards the request to any other leaf nodes that are connected to it and also to any main nodes to which it is connected. These main nodes forward the request to any leaf nodes that are connected to them.

In peer to peer networks, communication messages are sent to the nodes to which they are connected and, in turn, each of those nodes sends the communication messages to other nodes to which they are connected.

Multiple peer to peer networks exist, usually each having a preferred set of attributes. Users wishing to utilize one peer to peer network for its specific attributes must install specific software to access the specific network. Often users wish to access multiple networks and therefore have multiple software applications installed on their computer. When the user wishes to search a specific network the user must start the specific software application and initiate the search. If the result is not satisfactory, the user must launch a second application and search a second peer to peer network. Thus, it would be advantageous if users could search one network using the software application of their choice and have their communication messages be forwarded to a second network automatically.

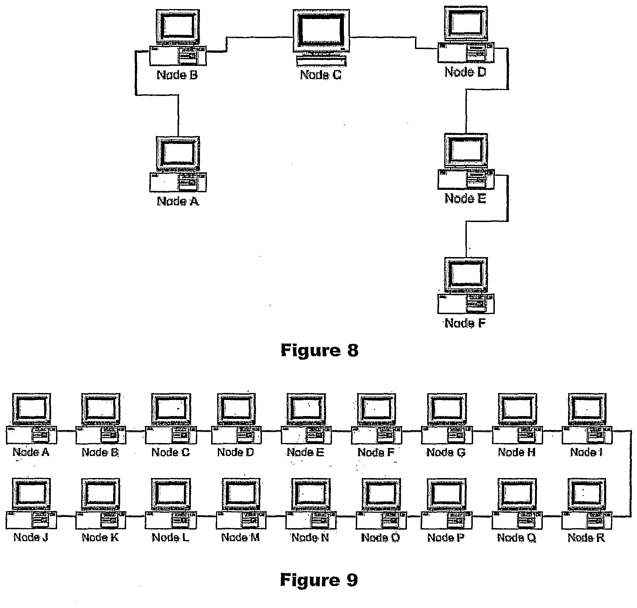

Referring to Figure 9, a peer to peer network is depicted but which is normally quite large. Often these networks comprise hundreds of thousands of nodes. To reduce the bandwidth required to operate such networks, nodes have a community imposed transmission distance or "Radius" limitation. Communication messages contain communication message radius parameters such as "hops" and time to live. Hops is a value that normally starts at 0 and increments each time the communications is forwarded. Time to live is a value that normally starts at 5 and is decremented each time the communications is forwarded. When hops reaches a preset limit, often 5, or time to live reaches 0, the communications is dropped from the network. Often nodes have a "Max time to live" setting and this value is typically set to 5. If a node receives a communication message time to live which is higher than its configured max time to live, the packet is either dropped or the communication message time to live is dropped to the configured value in the max time to live. This effectively enforces a community time to live value and limits the number of nodes that would receive communication message from a transmitting node. It would be advantageous if the communication message could travel some distance and then have its communication message radius parameters changed to an optimal or near optimal value to increase the distance the communication message could travel. For instance, a communication message could travel 4 hops and then have its settings changed back to O.

Accordingly it is an object of the present invention to provide a method for improving peer to peer network communications. It is yet another object of the present invention to connect two or more peer to peer networks together and accept communication messages from one and provide it to another. It is yet another object of the present invention to accept communication messages from a peer to peer network and change the communication message radius parameters to an optimal or near optimal value and retransmit the communication message so that the radius or distance of the communication is extended.

Document US 2003/208621 A1 may be construed to disclose a path optimizer for Peer to Peer (P2P) networks. Large amounts of P2P file exchanges increase the costs to maintain a network. Network service providers typically pay for the amount of data they exchange with other network service providers. The document examines P2P messages between and within networks and provides a cost efficient path to handle each P2P message.

Document US 2002/184310 A1 may be construed to disclose a system and method for providing peer groups in a peer-to-peer environment. A peer group may be one or more peers in a peer-to-peer environment that shares a set of network services and content. A peer group may define an implicit scope for messages originating from members peers of the peer group. A peer group may provide redundant services and content for greater reliability. Interaction among peers and peer groups in the peer-to-peer environment may be implemented using protocols that are platform-independent as to programming language implementations and network transports. Peers may discover existing peer groups and join the existing peer groups.

Document "Interoperability of Peer-To-Peer File Sharing Protocols", Siu Man Liu et.al., Transactions on ACM Sigecom Exchanges, volume 3, August 2002 may be construed to disclose a technique pertaining to a framework to integrate various P2P file sharing protocols by using a P2P gateway. The P2P gateway acts as a message converter, and operates in between peers. It converts incoming and outgoing messages to an understandable format for the requesting and responding peers. Interoperability of these file sharing protocols will facilitate file sharing.

Document "Peer to Peer: Harnessing the Power of Disruptive Technologies", Andy Oram, First Edition March 2001 may be construed to disclose an overview of the best-known peer-to-peer systems, such as Gnutella, Freenet, Jabber, Popular Power, SETI@Home, Red Rover, Publius, Free Haven, Groove Networks, and Reputation Technologies.

Document "Hybrid Periodical Flooding in Unstructured Peer-to-Peer Networks", Zhenyun Zhuang et.al., Proceedings on the Parallel Processing Conference, 2003, may be construed to disclose a technique pertaining to Hybrid Periodical Flooding (HPF), in which, after determining the number of relay neighbors (h), a peer decides which h nodes should be selected. A simple approach called Random Periodical Flooding (RPF) selects h relay neighbors at random. Selecting relay neighbors more objectively may result in better performance. For example, the shared data volume may be used as a metric to select query neighbors if it is found that peers with more shared data are more likely to satisfy queries. By selecting the neighbors with larger number of shard data, a query is more likely to succeed in less number of hops than that of random selection. Also the latency between the peer and its neighbors may be used as a metric to select neighbors. In this case, for a given TTL value, a query will experience a shorter delay. If multiple metrics in relay neighbor selection are considered, the search mechanism is expected to have better performance. This motivates to propose Hybrid Periodical Flooding (HPF) in which the number of relay neighbors can be changed periodically based on a periodical function and the relay neighbors are selected based on multiple metrics in a hybrid way.

Document "Responder Anonymity and Anonymous Peer-to-Peer File Sharing", Vincent Scarlata et.al, Proceedings of the International Conference on Network Protocols, 2001, may be construed to disclose a technique pertaining to Anonymous Peer-to-peer File Sharing (APFS) protocols, which provide mutual anonymity for peer-to-peer file sharing. APFS addresses the problem of long-lived Internet services that may outlive the degradation present in current anonymous protocols. One variant of APFS makes use of unicast communication, but requires a central coordinator to bootstrap the protocol. A second variant takes advantage of multicast routing to remove the need for any central coordination point.

Document "Mutual Anonymity Protocols for Hybrid Peer-to-Peer Systems", Li Xiao et.al, Proceedings of the 23rd International Conference on Distributed computing Systems, may be construed to disclose a technique pertaining to mutual communication anonymity between an information requester and a provider in a hybrid P2P information-sharing environment with trusted index servers such that neither the requester, nor the provider can identify each other, and no other peers can identify the two communicating parties with certainty.

### SUMMARY OF THE INVENTION

Generally, the present invention provides methods, a computer-readable medium and an apparatus according to the independent claims for improving peer to peer network communications. Developments are set forth in the dependent claims. The preferred method comprises the steps of:
For example, at least one improvement-node is placed into a peer to peer network. The improvement-node (a) may optionally connect a second time to the same or a different peer to peer network; (b) may accept communication messages from one network and forwarding it onto the same or another network, optionally setting the communication message radius parameters to an optimal or near optimal value. Additionally, the improvement-node may accept communication messages from one network and compare it to a set of definitions to make a decision to drop or forward the communication message. It may optionally set the communication message radius parameters to an optimal or near optimal value and forward the communication message.

Thus, there preferably is a method for connecting one or more peer to peer networks together and accepting communication messages from one and providing it to another. The invention does not require that all communication messages be forwarded or that the improvement-node connect to multiple networks. In one such embodiment the improvement-node only forwards search and search response communication messages while not forwarding other communication messages. In another embodiment the improvement-node connects to the same network and accepts communication messages, changes the communication messages radius parameters to an optimal or near optimal value, and resends it on the same network. In another embodiment the improvement-node accepts all communication messages and forwards all communication messages. In another embodiment the improvement-node accepts communication messages from one network and uses preconfigured information to decide if it should forward it onto another network. In yet another embodiment the improvement-node accepts communication messages from a node on a network and issues new communication messages containing the same information onto the same network or different network on behalf of the original node.

In all of the embodiments, the improvement-node is configured to have one or more of the features set forth below. These features are employed in the method for improving peer to peer network communication to provide enhanced capabilities compared to the network nodes in the particular network being addressed. Thus, not all of the capabilities need to be programmed into each improvement-node in order to accept and forward communication messages. The presently preferred configurations include:
- The improvement-node is configured to connect to the same network multiple times.
- The improvement-node is configured to connect to multiple networks.
- The improvement-node is configured to connect to multiple networks multiple times.
- The improvement-node is configured to accept communication messages from one network and forward it to another.
- The improvement-node is configured to accept communication messages from one network, change its communication message radius parameters, and resend the communication message on another network.
- The improvement-node is configured to accept communication messages from one network, change the communication message radius parameters, and resend the communication messages on the same network.
- The improvement-node is configured to make a decision to forward a communication message based on a pre-programmed configuration.
- The improvement-node is configured to make a decision to change communication message radius parameters based on a pre-programmed configuration.
- The improvement-node is configured to accept communication messages from one node, create new communication messages with the same information except changing the identification information to that of its own, forward the new communication messages onto the same or different network, receive responses to said new communication messages and forward response of new communication messages to the original node.
- The improvement-node is configured to speak multiple protocols.
- The improvement-node is configured to bridge together multiple networks.
- The improvement-node is configured to route one network to another.
- The improvement-node is configured to repeat a communication message to extend its distance of travel.

Other advantages of the present invention will become apparent from a perusal of the following detailed description of presently preferred embodiments of the invention taken in connection with the accompanying drawings.

### Brief Description of the Drawings

Figure 1 is a simplified schematic of a two node peer to peer network;
Figure 2 is a simplified schematic of a peer to peer proxy network;
Figure 3 is a simplified schematic view of a peer to peer, nonproxy, loop network;
Figure 4 is a simplified schematic of a peer to peer leaf/main node network;
Figure 5 is a flowchart representation of the programming or configuring an improvement-node to connect two networks together;
Figure 6 is a flowchart representation of the programming or configuring an improvement-node to change the communication message radius parameters to an optimal or near optimal value;
Figure 7 is a simplified schematic of two peer to peer networks being connected together via an improvement-node;
Figure 8 is a simplified schematic of an improvement-node being used to reset communication message radius parameters;
Figure 9 is a simplified schematic of a large peer to peer network.

### Description of Presently Preferred Embodiments

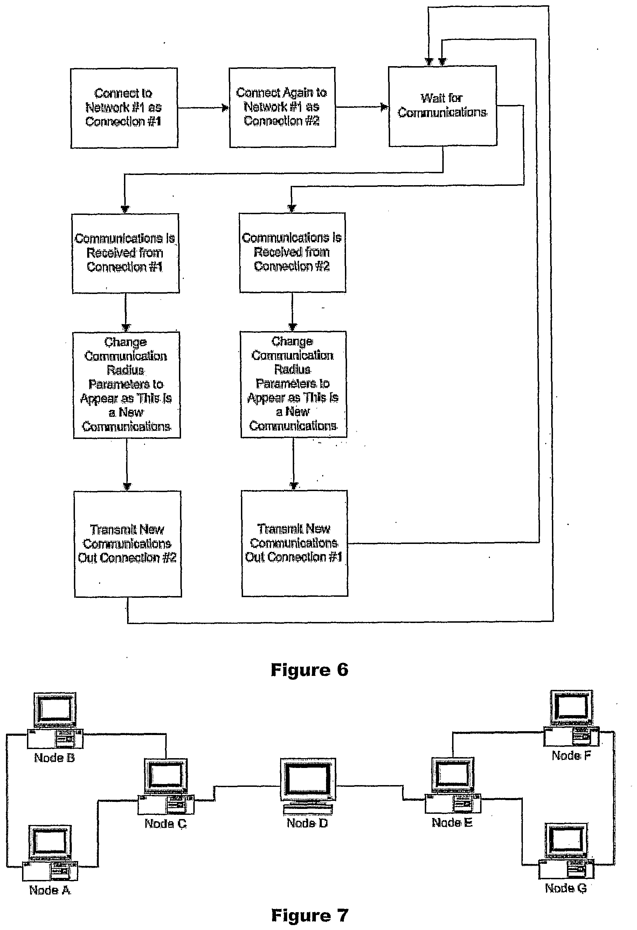

With reference to Figures 7 and 8, the preferred methods of the present invention advantageously utilize at least one improvement-node. The improvement-node has certain preferred attributes and these attributes are configured for the specific type of communications improvement desired by the end user.

In one preferred embodiment of the present invention, an improvement-node comprises both a hardware system such as a computer, thin appliance, ASIC based device or other similar device, which can be programmed with specific logic or programming code (i.e. software). In the preferred embodiments, the device preferably has the capability of being connected with a physical network either directly or through the use of a gateway. The programming logic provides the device with the capability to transmit and receive on both physical networks as well as the peer to peer networks which typically ride on top of a physical network. In the preferred embodiment of the invention programming logic is a software program but may also be hardcoded non-changeable procedural information such as typically found on an ASIC based device.

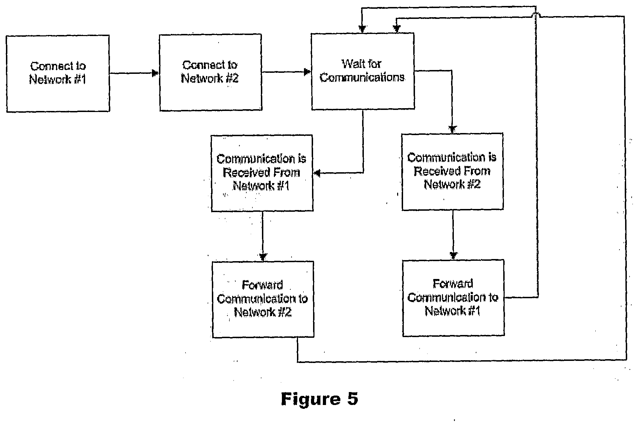

Referring generally to Figure 5, a flow chart discloses one method for the programming logic that configures a device acting as improvement-node to attach to two peer to peer networks. This improvement-node accepts communication messages from nodes participating on one network and forwards them onto another network.

Referring generally to Figure 6, a flow chart discloses one method for the programming logic that configures a device acting as an improvement-node to attach to the same peer to peer network twice. This improvement-node accepts communication messages from nodes participating on the network, changes the communication message radius parameters, and forwards the communication messages onto the same network.

It may be advantageous to prevent transmission of communications from one network to the other, for instance if the operator of the improvement-node was trying to prevent copyright infringement requests from transversing the networks. In this case the programming logic can be configured to receive communication messages and compare them to criteria and to then perform some event whether or not a match is found. The programming logic may elect to drop the communication message and not pass it on to other networks. This election can be automatic depending on trigger points such as load or it can be configured to do so by the user of the programming logic.

The method for comparing may include inter string, complete string, partial string, fuzzy logic, patricia tree or any other method that could be used to compare the likeness of two or more strings or portions of two or more strings. String comparison can occur in parallel with other searches to increase throughput or they can be compared serially (meaning one after another). If a match is made, the programming logic can drop the communication message if it is programmed to do so.

In one such embodiment the improvement-node only forwards search and search response communication message while not forwarding other communication messages. In this embodiment the improvement-node would accept the communication message, decide if it is a search or a response to a search and then forward on or drop the communication message based on its findings.

In another embodiment the improvement-node is functioning as a "repeater" so the communication message can travel further on the network then it normally would. In this case the improvement-node would accept the communication message from a node or network and set the communication message radius parameters to an optimal or near optimal value and retransmit the communication message.

In another embodiment the improvement-node accepts all communication messages and forwards all communication messages. In this embodiment the improvement-node would accept all communication messages from one network and forward it to another network.

In another embodiment the improvement-node accepts communication messages from a node and makes a request onto either the same network or a different network on behalf of the node. This would be useful in a caching environment or in an environment where the original node wished to hide its identity. The node would issue a communication message which the improvement-node would accept. The improvement-node would replace the original communication message with one of its own, making it appear as though it is sending the communication message for the benefit of itself. The improvement-node would maintain a table of node communication messages to "on behalf of' communication messages. As communication messages or services were returned to the improvement-node, the improvement node would look in this table for a correlation. It would then forward the communication messages or services to the original node.

### Examples

The following Examples illustrate various embodiments of the methods according to the present Invention.

**Example 1:** Referring to Figure 7, this example illustrates a method for connecting two networks together, accepting communication messages from one and forwarding it to another.

In this example nodes A, B and C are on a first network and nodes E, F and G are on a second network. Each network is unable to communicate with each other because they speak different protocols. Node D is an improvement node and is part of both networks and can speak both protocols. Node A searches for a file named "A" and sends this search request to nodes B and C. Nodes B and C accept this search request. Node C forwards the search request to node D. D accepts the search request and forwards it to node E. Node E accepts the search request and forwards it to nodes F and G. Nodes F and G accept the search request. All nodes process the search request. Node G finds that it has the file and sends a response to node E. Node E forwards this response to node D. Node D forwards this response to node C. Node C forwards this response to node A. Node A receives the response from node G which is on another network.

**Example 2:** Referring to Figure 8, this example illustrates a method for accepting communication messages from nodes participating on a single network, changing the communication message radius parameters, and forwarding the communication messages onto the same network.

In this example all nodes are on one network and node C is an improvement-node and is configured to accept any communication messages, change the communication message radius parameters to an optimal or near optimal value and retransmit the communication messages.

Node A is configured to send a search request no further than 3 hops away from where it is connected into the network. It sends the search to node B. Node B accepts the search and increments its hop value to 1 and forwards it to node C. Node C accepts the search and resets the hops value to 0 and forwards the search to node D. Node D accepts the search and increments its hop value to 1 and forwards the search to node E. Node E receives the search and increments its hop value to 2 and forwards the search to node F. Node F accepts the search. All node process the search request. Node F finds that it has the file and generates a response with a hop value of 0 and sends the response to node E. Node E accepts the response and increments the hop value to 1 and forwards this response to node D. Node D accepts the response and increments the hop value to 2 and forwards the response to node C. Node C accepts the response and changes the hop value to 0. Node C forwards the response to node B. Node B accepts the response and increments the hop value to 1 and then forwards the response to node A. Node A accepts the response. The end result is that even though Node G was 5 hops away it was still able to communicate with Node A.

**Example 3:** Referring to Figure 7, example 3 illustrates a method for connecting two networks together, accepting communication messages from one, comparing it a list of criteria and dropping the communication message if it matches or forwarding it if it doesn't.

In this example nodes A, B and C are on a first network and nodes E, F and G are on a second network. Each network is unable to communicate with each other because they use different protocols. Node D is an improvement-node and is part of both networks and can operate with both protocols. Node D is configured to drop searches for "Madonna.txt". Node A searches for a file named "Madonna.txt" and sends this search request to nodes B and C. Nodes B and C accept this search request. Node C forwards the search request to node D. Since node D is configured to drop searches that match "Madonna.txt" and because node A searched for "Madonna.txt" node D drops the search.

Node A then searches for a file named "A" and sends this search request to nodes B and C. Nodes B and C accept the search request. Node C forwards the search request to node D. Since node D is configured to drop searches for "Madonna.txt" and because node A searched for "A" node D forwards the search request to node E. Node E accepts the search request and forwards it to nodes F and G. Nodes F and G accept the search request. All nodes process the search request. Node G finds that it has the file and sends a response to node E. Node E forwards this response to node D. Node D forwards this response to node C. Node C forwards this response to node A. Node A receives the response from node G which is on another network.

**Example 4:** Again, referring to Figure 7, example 4 illustrates a method for connecting two networks together, accepting communication messages from one, and forwarding only searches and search responses and nothing else to another network.

In this example nodes A, B and C are on a first network and nodes E, F and G are on a second network. Each network is unable to communicate with each other because they use different protocols. Node D is an improvement-node and is part of both networks and can utilize both protocols. Node A searches for a file named "A" and sends this search request to nodes B and C. Nodes B and C accept this search request. Node C forwards the search request to node D. D accepts the search request and forwards it to node E. Node E accepts the search request and forwards it to nodes F and G. Nodes F and G accept the search request. All nodes process the search request. Node G finds that it has the file and sends a response to node E. Node E forwards this response to node D. Node D forwards this response to node C. Node C forwards this response to node A. Node A receives the response from node G which is on another network.

Node A then sends a ping request to nodes B and C. Node B receives the request and responds. Node C receives the request and responds. Node C forwards the ping request to node D. Because node D is configured to only forward search requests and responses it accepts the ping and responds but it does not forward the ping.

**Example 5:** Referring to Figure 7, example 5 illustrates a method for accepting communications from a node on a first network and forwarding the communications onto a second network while making it appear that the original communications came from the improvement-node when in fact it did not. For this example refer to Figure 7.

In this example node D is the improvement node. Node C wishes to locate a file named "X" and sends a search request to node D. Node D accepts this search request and creates a new request with the same search terms but with its own address information. Node D stores this request in a table so that it knows that if any requests are received it should forward them to node C. Node D forwards this request to node E. Node E accepts the search request and finds that it has a match. Node E generates a response with node D's address information and forwards the response to node D. Node D accepts the response and looks in it tables and finds that this response was meant for node C so it forwards this response to Node C.

While presently preferred embodiments of the invention have been shown and described, the invention may be otherwise embodied within the scope of the appended claims.

## Claims

1. A method of operating a peer to peer node in a peer to peer network, said method comprising the steps of
accepting a first communication message from a first node in the peer to peer network having a communication radius parameter indicating a maximum distance a message can travel in the peer to peer network, the first message including information therein;
creating a second communication message, the second communication message including the information from the first communication message;
setting the communication radius parameter of the second communication message to a value so that the information in the second communication message, that was originally in the first communication message, travels a distance that exceeds the communication radius parameter of the first communication message; and
forwarding the second communication message, including the information, to one or more other nodes in the peer to peer network, wherein the information travels a distance in the peer to peer network that exceeds the communication radius parameter of the first communication message.

2. The method as set forth in claim 1, wherein:
the accepting a first communication message comprises accepting plural first communication messages from the peer to peer network, the first communication messages each comprising identification information;
the creating of a second communication message comprises creating plural second communication messages with the information from the accepted communication messages and replacing the identification information with second identification information;
the setting of the communication radius parameter of the second communication messages comprises setting the communication radius parameter of the second communication messages to a value so that an expiration of the communication message radius parameter of the accepted messages does not occur when the information has traveled a distance equal to the maximum number of hops in the peer to peer network; and
wherein the method further comprises forwarding a response of the second communication messages to an original node of the peer to peer network.

3. The method as set forth in claim 2, wherein the peer to peer network node hides the identity of the original node.

4. The method as set forth in claim 2, wherein the communication messages are dropped when the communication messages match predetermined criteria.

5. The method as set forth in claim 1, further comprising:
connecting to the peer to peer network and a second peer to peer network.

6. The method as set forth in claim 5, wherein the communication radius parameter of said communication message is a number of hops.

7. A method of operating a peer to peer network node in a peer to peer network, said method comprising:
accepting a communication message having a communication radius parameter indicating a maximum distance the communication message is allowed to travel in the peer to peer network;
resetting the communication message radius parameter of the communication message to a value so that information in the communication message travels a distance that exceeds the maximum distance indicated as the communication radius parameter and so that there is no expiration of the communication message radius parameter of the communication message; and
forwarding the communication message.

8. A method as set forth in claim 7, where the communication radius parameter is a number of hops.

9. A method as set forth in claim 8, wherein said communication message is dropped when the communication message matches predefined criteria.

10. A method of communicating over a peer to peer network, said method comprising the steps of:
connecting at least one improvement node on at least one peer to peer network having an associated communication radius parameter indicating a total number of nodes a communication message can travel in the peer to peer network;
accepting a first communication message from a first node in the at least one peer to peer network, the first message including information therein;
altering a value associated with the first communication message to indicate that the message has traveled over a particular number of nodes, wherein the value does not exceed the communication radius parameter;
forwarding the first communication message onto the at least one peer to peer network to the improvement node;
resetting, by the improvement node, the value associated with the first communication message to a new value so that the total number of nodes traveled by the first communication message exceeds the communication radius parameter, prior to forwarding the first communication message over the at least one peer to peer network; and
forwarding the first communication message, with the new value, over the at least one peer to peer network to a different node.

11. A computer-readable medium comprising code portions which, when executed on a processor, configure the processor to perform all steps of a method according to any one of the preceding method claims.

12. An improvement node configured to perform all steps of a method according to any one of claims 1 to 9.

## Patentansprüche

1. Verfahren zum Betreiben eines Peer-zu-Peer-Knotens in einem Peer-zu-Peer-Netzwerk, wobei das Verfahren die Schritte umfasst:
Akzeptieren einer ersten Kommunikationsnachricht von einem ersten Knoten in dem Peer-zu-Peer-Netzwerk mit einem Kommunikationsradiusparameter, der eine maximale Distanz angibt, die eine Nachricht in dem Peer-zu-Peer-Netzwerk zurücklegen kann, wobei die erste Nachricht in sich Informationen umfasst;
Erstellen einer zweiten Kommunikationsnachricht, wobei die zweite Kommunikationsnachricht die Informationen aus der ersten Kommunikationsnachricht umfasst;
Setzen des Kommunikationsradiusparameters der zweiten Kommunikationsnachricht auf einen Wert derart, dass die Informationen in der zweiten Kommunikationsnachricht, die ursprünglich in der ersten Kommunikationsnachricht waren, eine Distanz zurücklegen, die den Kommunikationsradiusparameter der ersten Kommunikationsnachricht überschreitet; und
Weiterleiten der zweiten Kommunikationsnachricht einschließlich der Informationen zu einem oder mehreren anderen Knoten in dem Peer-zu-Peer-Netzwerk, wobei die Informationen eine Distanz in dem Peer-zu-Peer-Netzwerk zurücklegen, die den Kommunikationsradiusparameter der ersten Kommunikationsnachricht überschreitet.

2. Verfahren gemäß Anspruch 1, wobei:
das Akzeptieren einer ersten Kommunikationsnachricht ein Akzeptieren mehrerer erster Kommunikationsnachrichten aus dem Peer-zu-Peer-Netzwerk umfasst, wobei die ersten Kommunikationsnachrichten jeweils Identifikationsinformationen umfassen;
das Erstellen einer zweiten Kommunikationsnachricht ein Erstellen mehrerer zweiter Kommunikationsnachrichten mit den Informationen aus den akzeptierten Kommunikationsnachrichten und ein Ersetzen der Identifikationsinformationen durch zweite Identifikationsinformationen umfasst;
das Setzen des Kommunikationsradiusparameters der zweiten Kommunikationsnachrichten ein Setzen des Kommunikationsradiusparameters der zweiten Kommunikationsnachrichten auf einen Wert derart umfasst, dass ein Ablaufen des Kommunikationsnachrichtenradiusparameters der akzeptierten Nachrichten nicht auftritt, wenn die Informationen eine Distanz gleich der maximalen Anzahl von Sprüngen in dem Peer-zu-Peer-Netzwerk zurückgelegt haben; und
wobei das Verfahren weiterhin ein Weiterleiten einer Antwort der zweiten Kommunikationsnachrichten zu einem ursprünglichen Knoten des Peer-zu-Peer-Netzwerks umfasst.

3. Verfahren gemäß Anspruch 2, wobei der Peer-zu-Peer-Netzwerkknoten die Identität des ursprünglichen Knotens verbirgt.

4. Verfahren gemäß Anspruch 2, wobei die Kommunikationsnachrichten fallen gelassen werden, wenn die Kommunikationsnachrichten mit vorbestimmten Kriterien übereinstimmen.

5. Verfahren gemäß Anspruch 1, weiterhin umfassend:
Verbinden des Peer-zu-Peer-Netzwerks und eines zweiten Peer-zu-Peer-Netzwerks.

6. Verfahren gemäß Anspruch 5, wobei der Kommunikationsradiusparameter der Kommunikationsnachricht eine Anzahl von Sprüngen ist.

7. Verfahren zum Betreiben eines Peer-zu-Peer-Netzwerkknotens in einem Peer-zu-Peer-Netzwerk, wobei das Verfahren umfasst:
Akzeptieren einer Kommunikationsnachricht, die einen Kommunikationsradiusparameter aufweist, der eine maximale Distanz angibt, die die Kommunikationsnachricht in dem Peer-zu-Peer-Netzwerk zurücklegen darf;
Rücksetzen des Kommunikationsnachrichtenradiusparameters der Kommunikationsnachricht auf einen Wert derart, dass Informationen in der Kommunikationsnachricht eine Distanz zurücklegen, die die maximale Distanz überschreitet, die als der Kommunikationsradiusparameter angegeben ist, und derart, dass kein Ablaufen des Kommunikationsnachrichtenradiusparameters der Kommunikationsnachricht vorliegt; und
Weiterleiten der Kommunikationsnachricht.

8. Verfahren gemäß Anspruch 7, wobei der Kommunikationsradiusparameter eine Anzahl von Sprüngen ist.

9. Verfahren gemäß Anspruch 8, wobei die Kommunikationsnachricht fallen gelassen wird, wenn die Kommunikationsnachricht mit vorbestimmten Kriterien übereinstimmt.

10. Verfahren zum Kommunizieren über ein Peer-zu-Peer-Netzwerk, wobei das Verfahren die Schritte umfasst:
Verbinden von zumindest einem Verbesserungsknoten auf zumindest einem Peer-zu-Peer-Netzwerk, das einen assoziierten Kommunikationsradiusparameter umfasst, der eine Gesamtanzahl von Knoten angibt, die eine Kommunikationsnachricht in dem Peer-zu-Peer-Netzwerk zurücklegen kann;
Akzeptieren einer ersten Kommunikationsnachricht aus einem ersten Knoten in dem zumindest einen Peer-zu-Peer-Netzwerk, wobei die erste Nachricht in sich Informationen umfasst;
Abändern eines Werts, der mit der ersten Kommunikationsnachricht assoziiert ist, um anzugeben, dass sich die Nachricht über eine bestimmte Anzahl von Knoten bewegte, wobei der Wert nicht den Kommunikationsradiusparameter überschreitet;
Weiterleiten der ersten Kommunikationsnachricht auf dem zumindest einen Peer-zu-Peer-Netzwerk zu dem Verbesserungsknoten;
Rücksetzen, durch den Verbesserungsknoten, des Werts, der mit der ersten Kommunikationsnachricht assoziiert ist, auf einen neuen Wert derart, dass die Gesamtanzahl von Knoten, über die sich die erste Kommunikationsnachricht bewegte, den Kommunikationsradiusparameter überschreitet, vor einem Weiterleiten der ersten Kommunikationsnachricht über das zumindest eine Peer-zu-Peer-Netzwerk; und
Weiterleiten der ersten Kommunikationsnachricht mit dem neuen Wert über das zumindest eine Peer-zu-Peer-Netzwerk zu einem anderen Knoten.

11. Computerlesbares Medium, das Codeabschnitte umfasst, die bei Ausführung auf einem Prozessor den Prozessor konfigurieren, um alle Schritte eines Verfahrens gemäß einem der vorangegangenen Verfahrensansprüche durchzuführen.

12. Verbesserungsknoten, der konfiguriert ist, um alle Schritte eines Verfahrens gemäß einem der Ansprüche 1 bis 9 durchzuführen.

## Revendications

1. Procédé de fonctionnement d'un noeud poste à poste dans un réseau poste à poste, ledit procédé comprenant les étapes consistant à
accepter un premier message de communication en provenance d'un premier noeud dans le réseau poste à poste ayant un paramètre de rayon de communication indiquant une distance maximale qu'un message peut parcourir dans le réseau poste à poste, le premier message comprenant des informations dans celui-ci ;
créer un second message de communication, le second message de communication comprenant les informations provenant du premier message de communication ;
régler le paramètre de rayon de communication du second message de communication à une valeur de telle sorte que les informations dans le second message de communication, qui étaient à l'origine dans le premier message de communication, parcourent une distance qui dépasse le paramètre de rayon de communication du premier message de communication ; et
transférer le second message de communication, comprenant les informations, vers un ou plusieurs autres noeuds dans le réseau poste à poste, les informations parcourant une distance dans le réseau poste à poste qui dépasse le paramètre de rayon de communication du premier message de communication.

2. Procédé tel que décrit à la revendication 1, dans lequel :
l'acceptation d'un premier message de communication comprend l'acceptation de plusieurs premiers messages de communication en provenance du réseau poste à poste, les premiers messages de communication comprenant chacun des informations d'identification ;
la création d'un second message de communication comprend la création de plusieurs seconds messages de communication avec les informations en provenance des messages de communication acceptés et le remplacement des informations d'identification par des secondes informations d'identification ;
le réglage du paramètre de rayon de communication des seconds messages de communication comprend le réglage du paramètre de rayon de communication des seconds messages de communication à une valeur de telle sorte qu'une expiration du paramètre de rayon de message de communication des messages acceptés ne se produit pas lorsque les informations ont parcouru une distance égale au nombre maximal de sauts dans le réseau poste à poste ; et
le procédé comprenant en outre le transfert d'une réponse des seconds messages de communication vers un noeud d'origine du réseau poste à poste.

3. Procédé tel que décrit à la revendication 2, dans lequel le noeud de réseau poste à poste cache l'identité du noeud d'origine.

4. Procédé tel que décrit à la revendication 2, dans lequel les messages de communication sont abandonnés lorsque les messages de communication correspondent à des critères prédéterminés.

5. Procédé tel que décrit à la revendication 1, comprenant en outre :
la connexion au réseau poste à poste et à un second réseau poste à poste.

6. Procédé tel que décrit à la revendication 5, dans lequel le paramètre de rayon de communication dudit message de communication est un nombre de sauts.

7. Procédé de fonctionnement d'un noeud de réseau poste à poste dans un réseau poste à poste, ledit procédé comprenant :
accepter un message de communication ayant un paramètre de rayon de communication indiquant une distance maximale que le message de communication est autorisé à parcourir dans le réseau poste à poste ;
réinitialiser le paramètre de rayon de message de communication du message de communication à une valeur de telle sorte que des informations dans le message de communication parcourent une distance qui dépasse la distance maximale indiquée en tant que paramètre de rayon de communication et de telle sorte qu'il n'y a pas d'expiration du paramètre de rayon de message de communication du message de communication ; et
transférer le message de communication.

8. Procédé tel que décrit à la revendication 7, dans lequel le paramètre de rayon de communication est un nombre de sauts.

9. Procédé tel que décrit à la revendication 8, dans lequel ledit message de communication est abandonné lorsque le message de communication correspond à des critères prédéfinis.

10. Procédé de communication sur un réseau poste à poste, ledit procédé comprenant les étapes consistant à :
connecter au moins un noeud d'amélioration sur au moins un réseau poste à poste ayant un paramètre de rayon de communication associé indiquant un nombre total de noeuds qu'un message de communication peut parcourir dans le réseau poste à poste ;
accepter un premier message de communication en provenance d'un premier noeud dans l'au moins un réseau poste à poste, le premier message comprenant des informations dans celui-ci ;
modifier une valeur associée au premier message de communication pour indiquer que le message a avancé sur un nombre particulier de noeuds, la valeur ne dépassant pas le paramètre de rayon de communication ;
transférer le premier message de communication sur l'au moins un réseau poste à poste vers le noeud d'amélioration ;
réinitialiser, par le noeud d'amélioration, la valeur associée au premier message de communication à une nouvelle valeur de telle sorte que le nombre total de sauts parcourus par le premier message de communication dépasse le paramètre de rayon de communication, avant le transfert du premier message de communication sur l'au moins un réseau poste à poste ; et
transférer le premier message de communication, avec la nouvelle valeur, sur l'au moins un réseau poste à poste vers un noeud différent.

11. Support lisible par ordinateur comprenant des parties de code qui, lorsqu'elles sont exécutées sur un processeur, configurent le processeur pour réaliser toutes les étapes d'un procédé selon l'une quelconque des revendications de procédé précédentes.

12. Noeud d'amélioration configuré pour réaliser toutes les étapes d'un procédé selon l'une quelconque des revendications 1 à 9.
